# FASCICULE DE BREVET EUROPEEN

(11) **EP 0 698 195 B1**
(45) Date de publication et mention de la délivrance du brevet: **22.07.1998**
(21) Numéro de dépôt: 94916278.8
(22) Date de dépôt: 11.05.1994
(51) Int. Cl.: F16L 59/02, F16L 9/00

(54) **REVETEMENT INTERNE DE GAINE DE CLIMATISATION**
ROHRINNENAUSKLEIDUNG FÜR EINE KLIMAANLAGE
INNER LINING FOR AIR CONDITIONING DUCT

(30) Priorité: 14.05.1993 FR 9305873
(43) Date de publication de la demande: 28.02.1996
(73) Titulaire: ROCKWOOL-ISOLATION S.A., F-75013 Paris (FR)
(72) Inventeur: LESTOURNELLE, Caroline, F-77380 Combs-la-Ville (FR)
(74) Mandataire: Plaçais, Jean-Yves
(86) Numéro de dépôt international: FR9400568
(87) Numéro de publication internationale: WO9427082

(56) Documents cités:
- EP-A- 0 027 276
- WO-A-90/09281
- US-A- 2 032 103
- US-A- 3 092 529
- US-A- 3 212 529

## Description

L'invention concerne une gaine pour le transport d'air dans une installation de climatisation, comprenant un corps tubulaire en laine minérale.

Ce type de gaine est plus commode à réaliser que celui comportant un tube en tôle métallique qui est entouré, après mise en place, d'un manchon thermiquement isolant.

Dans les gaines connues, la face interne du corps tubulaire est nue ou est revêtue d'un voile de verre. Dans les deux cas, on constate des pertes de charge élevées dans le réseau aéraulique et un dégagement de poussière important, surtout lors de la mise en route du circuit.

EP-A-27 276 décrit une gaine selon le préambule de la revendication 1.

Le but de l'invention est de remédier à ces inconvénients, en réduisant sensiblement le frottement de l'air à l'intérieur de la gaine et l'entraînement de poussière.

L'invention vise une gaine définie par la revendication 1.

Des caractéristiques préférentielles de l'invention sont énoncées ci-après :
- La face interne de la feuille d'aluminium est brillante.
- Le revêtement interne est muni d'une couche de renfort liée à la face externe de la feuille d'aluminium.
- Le revêtement interne comprend en outre une seconde feuille d'aluminium, la couche de renfort étant prise en sandwich entre les deux feuilles d'aluminium.
- La face externe du corps tubulaire est également munie d'un revêtement, ce revêtement externe étant propre à être plié sans se rompre.
- Le revêtement externe comprend une couche de renfort prise en sandwich entre une feuille d'aluminium interne et une couche externe choisie dans le groupe formé par une feuille d'aluminium et une feuille de papier kraft.
- La couche de renfort est une grille de polyéthylène.
- Le revêtement interne et/ou le revêtement externe sont collés sur le corps tubulaire au moyen d'une colle vinylique à base aqueuse.
- Le corps tubulaire est en laine de roche.

L'invention a également pour objet une plaque utilisable pour la réalisation d'une gaine telle que définie ci-dessus, les caractéristiques de la revendication 9.

Les avantages de l'invention seront exposés plus en détail dans la description ci-après, en se référant aux dessins annexés, sur lesquels :
- la figure 1 est une vue partielle en coupe transversale d'une plaque selon l'invention; et
- la figure 2 est une vue schématique en coupe transversale d'une gaine selon l'invention obtenue à partir de la plaque de la figure 1.

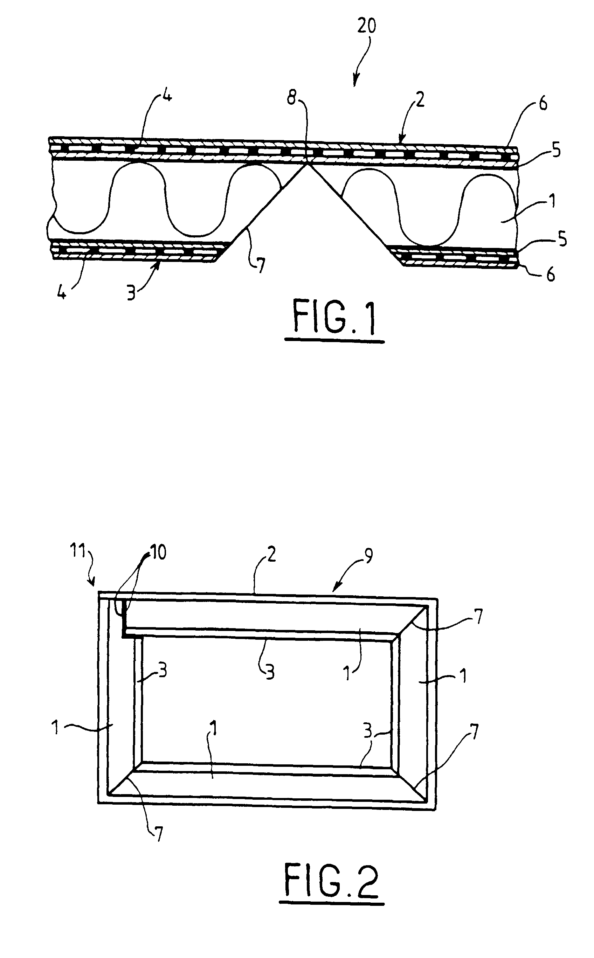

La plaque 20 représentée à la figure 1 comprend un matelas de laine de roche 1 de masse volumique d'environ 95 kg/m³ d'une épaisseur de 25 mm. Sur les deux faces de ce matelas sont collés, au moyen d'une colle vinylique à base aqueuse, deux revêtements 2, 3 respectivement, chaque revêtement étant composé d'une grille en polyéthylène 4 prise en sandwich entre deux feuilles d'aluminium 5, 6. La colle utilisée a de préférence un pouvoir calorifique suffisamment faible pour conférer au produit dans son ensemble le classement au feu M0. Chacun des revêtements 2 et 3 a une épaisseur globale de l'ordre de 20 microns.

La figure 1 montre également une entaille 7 à profil en V ouvert à 90°, pratiquée par découpage du revêtement 3 et du corps de laine de roche 1, en laissant intact le revêtement 2. La plaque peut être pliée à 90° autour du fond 8 de l'entaille de façon à amener les bords de celle-ci l'un contre l'autre, comme montré à la figure 2. Celle-ci représente une gaine 9 de section rectangulaire dont trois des angles sont obtenus par pliage le long de trois entailles 7. La gaine 9 comporte des bords d'assemblage 10, en forme de L, de la plaque venant en appui mutuel au quatrième angle 11. La surface extérieure de cette gaine est recouverte par le revêtement 2 qui s'étend de façon continue sur son périmètre, tandis que ses quatre faces internes sont recouvertes par des portions du revêtement 3. La feuille d'aluminium 6 du revêtement 3, comme les trois autres feuilles d'aluminium de la plaque 20, est d'une qualité employée couramment dans le bâtiment et présente une face brillante. Cette face brillante est de préférence tournée vers l'intérieur de la gaine de façon à réduire encore le frottement de l'air. La grille 4 du même revêtement 3 a notamment pour effet d'éviter l'amorce d'une déchirure de la feuille 6 lors de la réalisation de l'entaille 7. La présence de cette grille entraîne par ailleurs une légère ondulation de la surface libre du revêtement, qui n'a pas de conséquence néfaste.

Des essais comparatifs d'écoulement d'air ont été réalisés avec la gaine de la figure 2 et avec une gaine analogue dans laquelle le revêtement 3 est remplacé par un voile de verre.

Le tableau 1 donne le coefficient de perte d'énergie λ en fonction du nombre de Reynolds, mesuré pour un conduit rectiligne de section 250 x 250 mm et de longueur 5800 m. Le tableau 2 donne le coefficient ζ caractérisant la perte d'énergie dans un coude à 90°.

**TABLEAU 1**

| Revêtement intérieur en voile de verre | | Revêtement intérieur en aluminium | |
|---|---|---|---|
| Reynolds Re | Lambda λ | Reynolds Re | Lambda λ |
| 27387 | 0,026 | 26702 | 0,028 |
| 36956 | 0,024 | 36492 | 0,024 |
| 65169 | 0,024 | 65052 | 0,023 |
| 102290 | 0,022 | 103302 | 0,020 |
| 146342 | 0,021 | 148288 | 0,019 |
| 187291 | 0,022 | 184790 | 0,018 |
| 247660 | 0,022 | 249715 | 0,017 |
| 283503 | 0,023 | 288005 | 0,017 |
| 320922 | 0,023 | 324630 | 0,017 |

**TABLEAU 2**

| Revêtement intérieur en voile de verre | | Revêtement intérieur en aluminium | |
|---|---|---|---|
| Reynolds Re | Zêta ζ | Reynolds Re | Zêta ζ |
| 2745 | 0,684 | 27628 | 0,581 |
| 37043 | 0,627 | 37115 | 0,573 |
| 65192 | 0,696 | 65576 | 0,606 |
| 101923 | 0,671 | 102692 | 0,540 |
| 146981 | 0,660 | 147797 | 0,520 |
| 183809 | 0,687 | 184697 | 0,545 |
| 248819 | 0,670 | 249724 | 0,499 |
| 284678 | 0,674 | 288105 | 0,494 |
| 320695 | 0,685 | 324641 | 0,489 |

Le coefficient λ du conduit selon l'invention est 0,017 contre 0,022 pour celui comportant un voile de verre, soit un gain de 23%.

Le coefficient ζ est ramené de 0,68 à 0,5, soit un gain de 26%.

Des tests d'érosion ont montré une réduction du dégagement de poussière par un facteur de 10 à 15 par rapport à la gaine revêtue de voile de verre.

Le revêtement 2, destiné à assurer l'étanchéité extérieure de la gaine, peut être constitué par tout matériau ou stratifié imperméable à l'air, pouvant être collé et pouvant se plier sans se rompre. Il est envisagé en particulier de remplacer la feuille d'aluminium extérieure 6 de ce revêtement par une feuille de papier kraft.

## Revendications

1. Gaine (9) pour le transport d'air dans une installation de climatisation, comprenant une couche de laine minérale occupant un espace annulaire entre un élément tubulaire interne (3) et un élément tubulaire externe (2), caractérisé en ce que ladite couche et lesdits éléments tubulaires sont constitués respectivement par un corps tubulaire (1) et par des revêtements (3, 2) des faces interne et externe dudit corps, que le revêtement interne comprend une feuille d'aluminium mince et lisse (6) dont la face interne constitue la face interne de la gaine, que le revêtement externe est propre à être plié sans se rompre, et que la gaine est obtenue à partir d'une plaque comprenant un corps (1) en laine minérale muni sur ses deux faces desdits revêtements interne et externe (3, 2) respectivement, des entailles (7) à profil en V étant pratiquées par découpage du revêtement interne et du corps, en laissant intact le revêtement externe, de façon à permettre le pliage de la plaque autour du fond (8) des entailles pour amener les bords de celles-ci l'un contre l'autre.

2. Gaine selon la revendication 1, caractérisée en ce que la face interne de la feuille d'aluminium est brillante.

3. Gaine selon l'une des revendications 1 et 2, caractérisée en ce que le revêtement interne est muni d'une couche de renfort (4) liée à la face externe de la feuille d'aluminium (6).

4. Gaine selon la revendication 3, caractérisée en ce que le revêtement interne comprend en outre une seconde feuille d'aluminium (5), la couche de renfort (4) étant prise en sandwich entre les deux feuilles d'aluminium (5,6).

5. Gaine selon l'une des revendications précédentes, caractérisée en ce que le revêtement externe comprend une couche de renfort (4) prise en sandwich entre une feuille d'aluminium interne (5) et une couche externe (6) choisie dans le groupe formé par une feuille d'aluminium et une feuille de papier kraft.

6. Gaine selon l'une des revendications 3 à 5, caractérisée en ce que la couche de renfort (4) est une grille de polyéthylène.

7. Gaine selon l'une des revendications précédentes, caractérisée en ce que le revêtement interne (3) et/ou le revêtement externe (2) sont collés sur le corps tubulaire (1) au moyen d'une colle vinylique à base aqueuse.

8. Gaine selon l'une des revendications précédentes, caractérisée en ce que le corps tubulaire (1) est en laine de roche.

9. Plaque (20) utilisable pour la réalisation d'une gaine selon l'une des revendications précédentes, par découpe et pliage, cette plaque comprenant un corps (1) en laine minérale et des revêtements (3, 2) sur les deux faces de celui-ci, l'un (3) desdits revêtements comportant une feuille d'aluminium (6) mince et lisse dont une face constitue une face de la plaque, et des entailles (7) à profil en V étant pratiquées par découpage de ce même revêtement et du corps, en laissant intact l'autre revêtement, de façon à permettre le pliage de la plaque autour du fond (8) des entailles pour amener les bords de celles-ci l'un contre l'autre.

## Patentansprüche

1. Rohrleitung (9) für den Transport von Luft in einer Klimaanlage, umfassend eine Mineralwolleschicht, die einen Ringraum zwischen einem inneren röhrenförmigen Element (3) und einem äußeren röhrenförmigen Element (2) ausfüllt, dadurch gekennzeichnet, daß die besagte Schicht und die besagten röhrenförmigen Elemente von einem röhrenförmigen Körper (1) bzw. von Verkleidungen (3, 2) der Innen- und Außenseite des besagten Körpers gebildet werden, daß die innere Verkleidung eine dünne und glatte Aluminiumfolie (6) umfaßt, deren Innenseite die Innenseite der Rohrleitung bildet, daß sich die äußere Verkleidung ohne zu brechen biegen läßt, und daß sich die Rohrleitung aus einer Platte ergibt, die einen Körper (1) aus Mineralwolle umfaßt, der auf seinen beiden Seiten mit der besagten inneren bzw. äußeren Verkleidung (3, 2) versehen ist, wobei Einschnitte (7) mit V-Profil durch Schneiden der inneren Verkleidung und des Körpers unter Intaktlassen der äußere Verkleidung angebracht werden, so daß das Biegen der Platte um den Grund (8) der Einschnitte ermöglicht wird, um die Ränder derselben zusammenzuführen.

2. Rohrleitung nach Anspruch 1, dadurch gekennzeichnet, daß die Innenseite der Aluminiumfolie glänzend ist.

3. Rohrleitung nach einem der Ansprüche 1 und 2, dadurch gekennzeichnet, daß die innere Verkleidung mit einer Verstärkungsschicht (4) versehen ist, die mit der Außenseite der Aluminiumfolie (6) verbunden ist.

4. Rohrleitung nach Anspruch 3, dadurch gekennzeichnet, daß die innere Verkleidung außerdem eine zweite Aluminiumfolie (5) umfaßt, wobei die Verstärkungsschicht (4) in Sandwichanordnung zwischen den beiden Aluminiumfolien (5,6) gehalten wird.

5. Rohrleitung nach einem der vorangehenden Ansprüche, dadurch gekennzeichnet, daß die äußere Verkleidung eine Verstärkungsschicht (4) umfaßt, die in Sandwichanordnung zwischen einer inneren Aluminiumfolie (5) und einer äußeren Schicht (6) gehalten wird, die aus der von einer Aluminiumfolie und einem Kraftpapierbogen gebildeten Gruppe ausgewählt ist.

6. Rohrleitung nach einem der Ansprüche 3 bis 5, dadurch gekennzeichnet, daß die Verstärkungsschicht (4) ein Polyethylengitter ist.

7. Rohrleitung nach einem der vorangehenden Ansprüche, dadurch gekennzeichnet, daß die innere Verkleidung (3) und/oder die äußere Verkleidung (2) mittels eines Vinylklebers auf Wasserbasis auf den röhrenförmigen Körper (1) aufgeklebt sind.

8. Rohrleitung nach einem der vorangehenden Ansprüche, dadurch gekennzeichnet, daß der röhrenförmige Körper (1) aus Gesteinswolle ist.

9. Platte (20), die für die Herstellung einer Rohrleitung nach einem der vorangehenden Ansprüche durch Schneiden und Biegen verwendbar ist, wobei diese Platte einen Körper (1) aus Mineralwolle und Verkleidungen (3, 2) auf den beiden Seiten desselben umfaßt, wobei die eine (3) der besagten Verkleidungen eine dünne und glatte Aluminiumfolie (6) aufweist, deren eine Seite eine Seite der Platte bildet, und wobei Einschnitte (7) mit V-Profil durch Schneiden dieser selben Verkleidung und des Körpers unter Intaktlassen der anderen Verkleidung angebracht werden, so daß das Biegen der Platte um den Grund (8) der Einschnitte ermöglicht wird, um die Ränder derselben zusammenzuführen.

## Claims

1. Duct (9) for transporting air in an air-conditioning system, comprising a layer of mineral wool occupying an annular space between an internal tubular element (3) and an external tubular element (2), characterized in that the said layer and the said tubular elements consist respectively of a tubular body (1) and coatings (3, 2) on the inner and outer faces of the said body, that the inner coating comprises a thin and smooth aluminium sheet (6), the inner face of which constitutes the inner face of the duct, that the outer coating is able to be folded without breaking, and that the duct is obtained from a plate comprising a body (1) of mineral wool fitted on its two faces with the said inner and outer coatings (3, 2) respectively, V-shaped notches (7) being applied by cutting the inner coating and the body and leaving intact the outer coating so as to allow folding of the plate around the base (8) of the notches to bring the edges of these into contact with each other.

2. Duct according to claim 1, characterized in that the inner face of the aluminium sheet is bright.

3. Duct according to any of claims 1 and 2, characterized in that the inner coating is fitted with a reinforcing layer (4) linked to the outer face of the aluminium sheet (6).

4. Duct according to claim 3, characterized in that the inner coating also comprises a second aluminium sheet (5), the reinforcing layer (4) being sandwiched between the two aluminium sheets (5, 6).

5. Duct according to any of the previous claims, characterized in that the outer coating comprises a reinforcing layer (4) sandwiched between an inner aluminium sheet (5) and an outer layer (6) selected from the group formed by an aluminium sheet and a kraft paper sheet.

6. Duct according to any of claims 3 to 5, characterized in that the reinforcing layer (4) is a polyethylene grille.

7. Duct according to any of the previous claims, characterized in that the inner coating (3) and/or the outer coating (2) are glued to the tubular body (1) by means of a water-based vinyl glue.

8. Duct according to any of the previous claims, characterized in that the tubular body (1) is made of rock wool.

9. Plate (20) suitable for use for production of a duct according to any of the previous claims by cutting and folding, this plate comprising a body (1) of mineral wool and coatings (3, 2) on the two faces of this, one (3) of the said coatings comprising a thin and smooth aluminium sheet (6), one face of which constitutes one face of the plate, and V-shaped notches (7) being applied by cutting this same coating and the body while leaving intact the other coating so as to allow folding of the plate around the base (8) of the notches to bring the edges of these into contact with each other.
